Europäisches Patentamt

European Patent Office

Office européen des brevets

(11) Veröffentlichungsnummer: **0 374 369**
**A1**

(12) **EUROPÄISCHE PATENTANMELDUNG**

(21) Anmeldenummer: **89115752.1**

(22) Anmeldetag: **26.08.89**

(51) Int. Cl.⁵: **H04N 5/64, H04N 5/65,**
**H05K 11/00**

(30) Priorität: **21.12.88 DE 3842949**

(43) Veröffentlichungstag der Anmeldung:
**27.06.90 Patentblatt 90/26**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Werner, Christian GRUNDIG E.M.V.**
**Max Grundig**
**holländ. Stiftung & Co KG Kurgartenstrasse**
**37**
**D-8510 Fuerth(DE)**

(54) **Fernsehgerät mit einem aus Kunststoff gefertigten Gehäuse.**

㊼ Beschrieben ist ein Fernsehgerät mit einem aus Kunststoff gefertigten Gehäuse und aufgesetzter Rückwand, wobei das Gehäuse (2) aus drei miteinander verbundenen Formteilen, einem den Bildschirm tragenden Gehäuse-Oberteil (3), einem in Form eines Sockels ausgeführten Gehäuse-Unterteil (4) und einem zwischen Gehäuse-Oberteil und Gehäuse-Unterteil eingesetztem schmalen Bedienungsteil (5) besteht. Das Gehäuse-Unterteil (4) ist gegenüber dem Gehäuse-Oberteil (3) im Seitenbereich zurückgesetzt und beidseitig ist in die so entstandene Stufe ein von unten zugängliche Griffmulde eingeformt. Das Gehäuse-Unterteil weist seitlich mit frontaler Öffnung je eine in den Innenraum des Gerätes erweiternd hineinragende Lautsprecherbox (7) mit zurückliegem Lautsprecher auf.

Fig.1

# FERNSEHGERÄT MIT EINEM AUS KUNSTSTOFF GEFERTIGTEN GEHÄUSE

Die Erfindung betrifft ein Fernehgerät mit einem aus Kunststoff gefertigten Gehäuse und aufgesetzter Rückwand.

Es sind Fernsehgeräte bekannt, deren Gehäuse eine vielgestaltige Form aufweisen und aus Kunststoff gefertigt sind, wobei die Rückseite ebenfalls aus einer aus Kunststoff gefertigten Rückwand abgedeckt ist. Die Frontseite von Fernsehgeräten besteht in zunehmender Weise aus dem Bildschirm, einem den Bildschirm einfassenden Gehäuse-Rahmen und einem unteren Bedienungsteil. Die Lautsprecher sind hier vorzugsweise in den beiden Seitenwänden des Gehäuses integriert und können bei manchen Gerätemodellen bedarfsweise herausgeschwenkt werden. Die Seitenlautsprecher sind jedoch nachteilig, insbesondere dann, wenn das Fernsehgerät in ein Möbelstück eingestellt werden soll, und meist kein für die seitliche Lautsprecherabstrahlung erforderliches Einbauvolumen zur Verfügung steht.

Für den Benutzer von Fernsehgeräten ist es deshalb vorteilhaft, wenn ein Gerät frontseitig möglichst nur die Fläche des Bildschirmes benötigt und trotzdem eine hochwertige frontalabstrahlende akustische Wiedergabe ermöglicht.

Die der Erfindung zugrunde liegende Aufgabe besteht nun darin, das Gehäuse eines Fernsehgerätes derart zu gestalten, daß frontseitig der Bildschirm den überwiegenden Teil der Gehäusefläche einnimmt, und hochwertige frontalabstrahlende Lautsprecherboxen im Gehäuse unauffällig integriert sind, sowie das Gerät in einfachster Weise zu tragen ist.

Diese Aufgabe wird durch die kennzeichnenden Merkmale im Anspruch 1 gelöst.

Die Unteransprüche zeigen vorteilhafte Ausgestaltungen der Erfindung.

Die Erfindung wird nachfolgend anhand der Zeichnungen erläutert:

Fig. 1 ist eine perspektivische Darstellung eines Fernsehgerätes mit einem Gehäuse aus drei Gehäuse-Formteilen,

Fig. 2 ist eine perspektivische Darstellung eines Fernsehgerätes nach Fig. 1, jedoch mit aufgebrochenen Seitenteil,

Fig. 3 ist eine perspektivische Darstellung eines Fernsehgerätes nach Fig. 1, jedoch mit einem teilweise aufgeklapptem Bedienungsteil und

Fig. 4 ist eine perspektivische Darstellung eines Fernsehgerätes nach Fig. 1, jedoch mit einem eingesetzten Videorecorder.

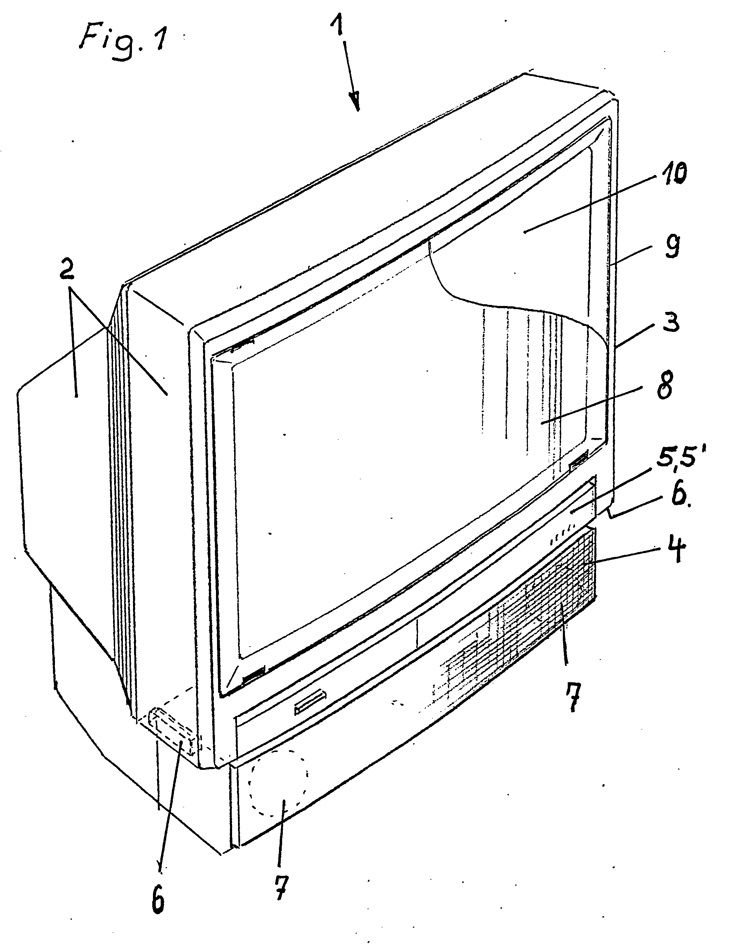

Die Fig. 1 zeigt ein Fernsehgerät 1, dessen Gehäuse (2) im wesentlichen aus drei verbundenen Gehäuse-Formteilen, einem die Bildröhre tragendem Gehäuse-Oberteil 3, einem in Form eines Sockels ausgeführtem Gehäuse-Unterteil (4), und einem zwischen Gehäuse-Oberteil und Gehäuse-Unterteil eingesetzten schmalen Bedienungsteil 5 besteht. Das Gehäuse-Unterteil 4 ist gegenüber dem Gehäuse-Oberteil 3 im Geräte-Seitenbereich zurückgesetzt, und in den beidseitig so entstandenen Stufen ist je eine von unten zugängliche Griffmulde 6 eingeformt. Im Gehäuse-Unterteil ist seitlich mit frontaler Öffnung je eine in den Innenraum des Gerätes erweiternd hineinragende Lautsprecherbox 7 mit zurückliegendem Lautsprecher eingesetzt. Das Gehäuse-Oberteil 3 weist frontseitig einen schmalen, den Bildschirm umfassenden Rand 9 auf. Auf der Innenseite dieses Randes ist eine Stufe eingebracht, in die eine leicht gewölbte Filterscheibe 10 eingesetzt ist.

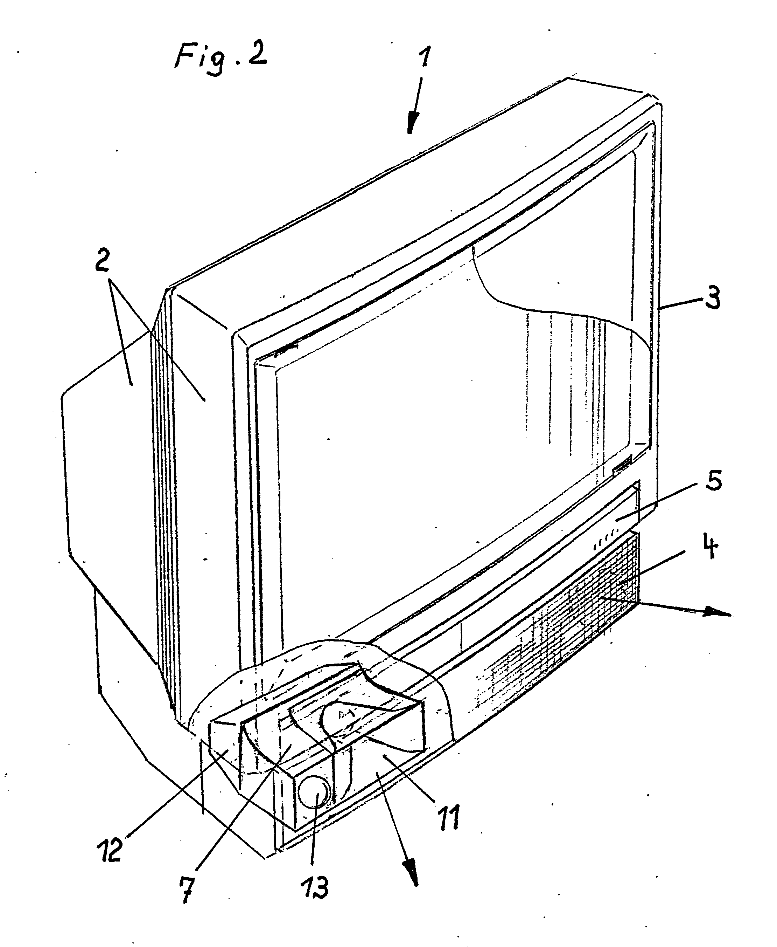

Aus der Fig. 2 ist durch ein aufgebrochen gezeichnetes Geräte-Seitenteil die Lage einer der beiden Lautsprecherboxen 7 im Gehäuse-Unterteil 4 des Fernsehgerätes zu erkennen. Die Lautsprecherbox 7 besteht hierbei aus einem nach vorne offenen Schallführungsteil 11 und einem sich in das Geräteinnere erweiternd hineinragenden Resonanzteil 12. Das Resonanzteil 12 kann hierbei den durch die konisch zulaufende Bildröhre freiwerdenden Geräte-Innenraum ausfüllen, so daß ein erhebliches Boxenvolumen entsteht und ein Baßlautsprecher von weit größerem Membrandurchmesser eingesetzt werden kann, als dies die kleine frontseitige Öffnung im Gehäuse-Unterteil erlauben würde. Bedarfsweise kann die Lautsprecherbox 7 auch zusätzlich mit einem Mitteltonlautsprecher ausgerüstet sein, wobei der Baßlautsprecher und der Mitteltonlautsprecher, die sich im Inneren der Box befinden, in der Zeichnung nicht näher dargestellt sind. Das Schallführungsteil 11 ist so gestaltet, daß die Schallabstrahlung gemäß angedeuteter Pfeilrichtung gerichtet erfolgt, wodurch eine verbessertere stereophone Wiedergabe erreicht wird. Die Lautsprecherbox 7 kann auch als Baßreflexbox ausgebildet sein oder sie kann zusätzlich mit einem frontseitig angeordneten Hochtonlautsprecher 13 ausgerüstet sein.

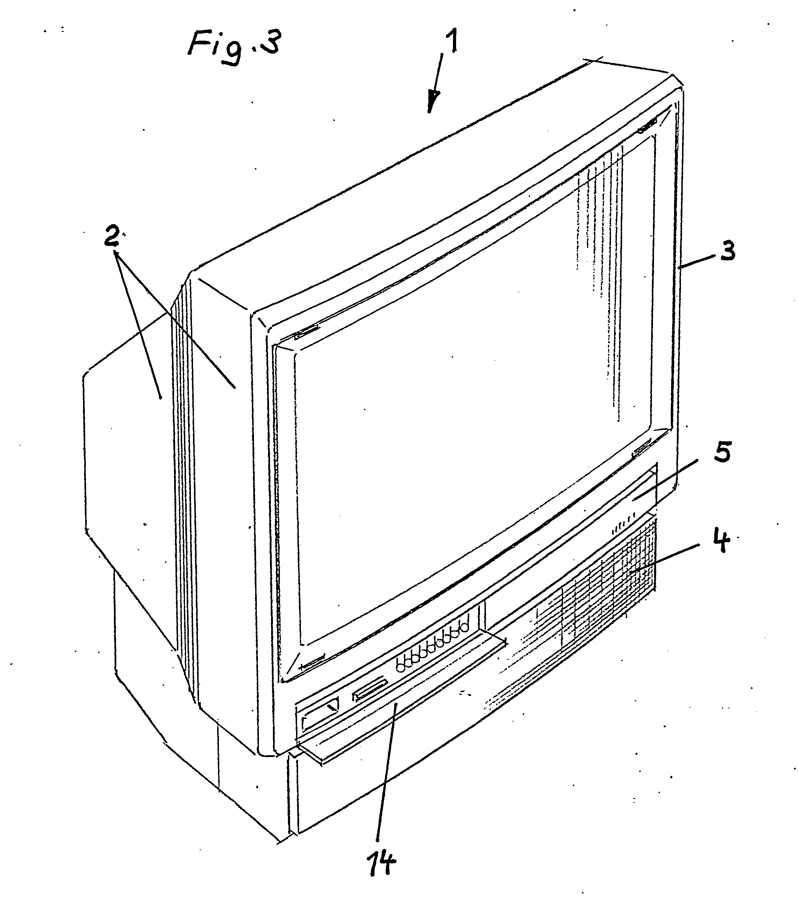

Die Fig. 3 läßt erkennen, daß das schmale Bedienungsteil 5, das über dem ebenfalls schmalen Gehäuse-Unterteil angeordnet ist, einen durchgehenden Zierstreifen aufweist, wobei bedarfsweise ein Teil des Zierstreifens als Klappe 14 ausgebildet sein kann. Hinter dieser Klappe befinden sich die zur Grundeinstellung des Fernsehgerätes erforderlichen Bedienungselemente. Diese Klappe 14 kann jedoch auch über die gesammte Breite des Bedienungsteils 5 ausgedehnt sein, so daß keine Unterteilung des aus eingefärbtem jedoch durchscheindendem Material bestehenden Zierstreifens gegeben ist.

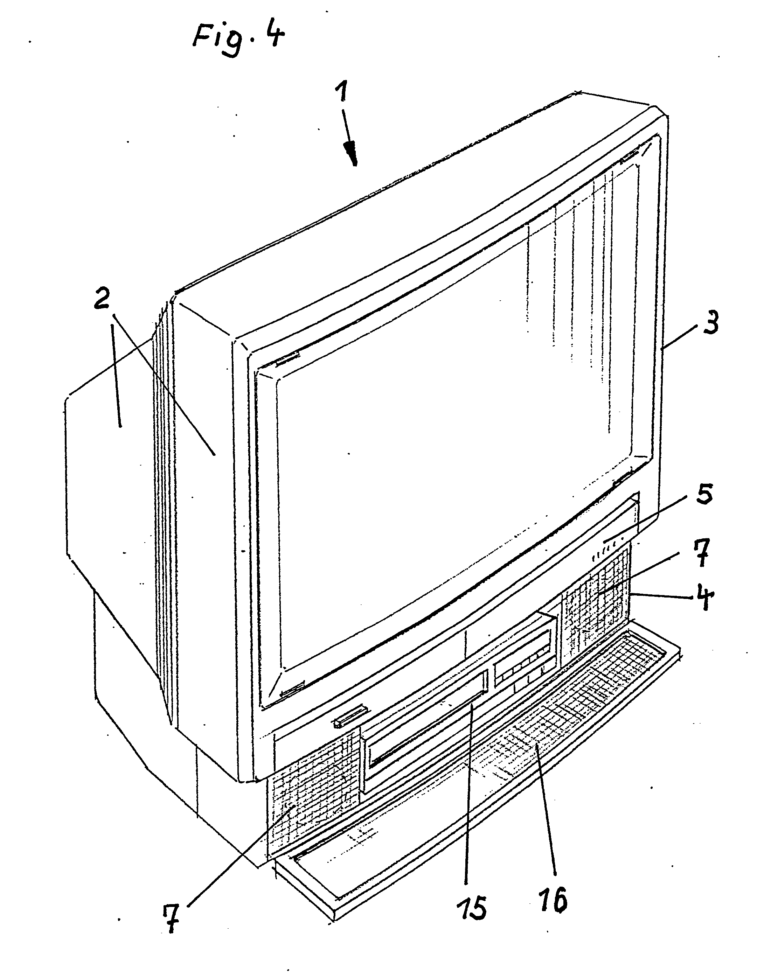

Die Fig. 4 zeigt, daß zwischen den beiden Lautsprecherboxen 7 im Gehäuse-Unterteil 4 des Fernsehgerätes 1 ein Videorecorder 15 eingesetzt ist. Die Frontseite des Gehäuse-Unterteils 4 ist hierfür mit einer zusätzlichen Abdeckung 16 versehen, so daß der Videorecorder während des Gerätebetriebes nicht zu erkennen ist und die Abdeckung 16 nur beim Wechseln der Videokassette geöffnet werden muß. Die Abdeckung 16 ist zumindest im Boxenbereich schalldurchlässig ausgeführt oder sie ist derart ausgeführt, daß sie nur den Videorecorderbereich abdeckt.

### Ansprüche

1. Fernsehgerät mit einem aus Kunststoff gefertigten Gehäuse und aufgesetzter Rückwand, **dadurch gekennzeichnet**,

a) daß das Gehäuse (2) aus drei miteinander verbundenen Gehäuseformteilen, einem den Bildschirm (Bildröhre) tragendem Gehäuse-Oberteil (3), einem in Form eines Sockels ausgeführtem Gehäuse-Unterteil (4) und einem zwischen Gehäuse-Oberteil und Gehäuse-Unterteil eingesetzten schmalen Bedienungsteil (5) besteht,

b) daß das Gehäuse-Unterteil (4) gegenüber dem Gehäuse-Oberteil im Geräte-Seitenbereich zurückgesetzt ist und beidseitig in den so entstandenen Stufen je eine von unten zugängliche Griffmulde (6) eingeformt ist,

c) daß im Gehäuse-Unterteil (4) seitlich mit frontaler Öffnung je eine in den Innenraum des Gerätes erweiternd hineinragende Lautsprecherbox (7) mit zurückliegendem Lautsprecher eingesetzt ist, und die Lautsprecherbox durch den nach vorne offenen Schallführungsteil (11) eine gerichtete Schallabstrahlung aufweist.

2. Fernsehgerät nach Anspruch 1, **dadurch gekennzeichnet**, daß die drei Gehäuseformteile (3, 4, 5) als ein einstückig aus Kunststoff gefertigtes Gehäuse (2) zusammengefaßt sind.

3. Fernsehgerät nach den Ansprüchen 1 und 2, **dadurch gekennzeichnet**, daß das Gehäuse-Oberteil frontseitig einen schmalen, den Bildschirm umfassenden Rand (9) aufweist, und daß der Rand auf der Innenseite eine Stufe besitzt, in die eine leicht gewölbte Filterscheibe (10) eingesetzt ist.

4. Fernsehgerät nach einem der bisherigen Ansprüche, **dadurch gekennzeichnet**, daß neben dem Schallführungsteil (11) in die Lautsprecherbox (7) frontseitig ein Hochtonlautsprecher (13) eingesetzt ist.

5. Fernsehgerät nach einem der bisherigen Ansprüche, **dadurch gekennzeichnet**, daß die Lautsprecherbox (7) als Baßreflexbox ausgebildet ist.

6. Fernsehgerät nach einem der bisherigen Ansprüche, **dadurch gekennzeichnet**, daß in das Gehäuse-Unterteil (4) zwischen den beiden Lautsprecherboxen (7) ein Videorecorder (15) eingesetzt ist.

7. Fernsehgerät nach einem der bisherigen Ansprüche, **dadurch gekennzeichnet**, daß das Gehäuse-Unterteil (4) eine die Frontseite abdeckende schwenkbare Abdeckung (16) aufweist.

8. Fernsehgerät nach einem der bisherigen Ansprüche, **dadurch gekennzeichnet**, daß das schmale Bedienungsteil (5) frontseitig aus einem durchgehenden transparenten Zierstreifen (5') besteht.

9. Fernsehgerät nach Anspruch 8, **dadurch gekennzeichnet**, daß der Zierstreifen (5') unterteilt ist, und ein Teil des Zierstreifens als schwenkbare Klappe (14) ausgebildet ist.

Fig. 1

Fig.2

Fig.3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE - A1 - 3 210 639 <br> (SONY) <br> * Fig. 1,3 * | 1,3 | H 04 N 5/64 <br> H 04 N 5/65 <br> H 05 K 11/00 |
| A | DE - A1 - 3 128 462 <br> (STANDARD ELEKTRIK LORENZ AG) <br> * Zusammenfassung; Fig. 1,2 * | 1,3-5 | |
| A | US - A - 4 686 576 <br> (DICKIE) <br> * Fig. 1,2 * | 1,3 | |
| A | DE - A1 - 3 146 395 <br> (GORENJE) <br> * Zusammenfassung * | 1,6 | |
| A | US - A - 2 571 903 <br> (LOEWI) <br> * Fig. 1-3 * | 1,7 | |
| A | FR - A - 1 600 354 <br> (VIDEOPLASTIC) <br> * Seite 1, Zeilen 28,29; Fig. 1 * | 1 | **RECHERCHIERTE SACHGEBIETE (Int. Cl.4)** <br><br> H 04 N 5/00 <br> H 05 K 11/00 |

Der vorliegende Recherchenbericht wurde für alle Patentansprüche erstellt.

| Recherchenort | Abschlußdatum der Recherche | Prüfer |
|---|---|---|
| WIEN | 28-12-1989 | BENISCHKA |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82